# EUROPÄISCHE PATENTSCHRIFT

(11) **EP 2 998 611 B1**
(45) Veröffentlichungstag und Bekanntmachung des Hinweises auf die Patenterteilung: **24.07.2019**
(21) Anmeldenummer: 14185342.4
(22) Anmeldetag: 18.09.2014
(51) Int. Cl.: F16F 15/023, F16F 15/04

(54) **Schwingungsisolator mit pneumatischer Feder**
Vibration isolator with pneumatic spring
Isolateur de vibrations doté de ressort pneumatique

(43) Veröffentlichungstag der Anmeldung: 23.03.2016
(73) Patentinhaber: Integrated Dynamics Engineering GmbH, 65479 Raunheim (DE)
(72) Erfinder: Evers, Arndt, 65375 Oestrich-Winkel (DE)
(74) Vertreter: Blumbach · Zinngrebe Patentanwälte PartG mbB

(56) Entgegenhaltungen:
- WO-A1-99/05573
- US-A- 4 549 470
- US-A- 5 779 010
- US-B1- 6 926 263

## Beschreibung

### Gebiet der Erfindung

Die Erfindung betrifft einen Schwingungsisolator mit einer pneumatischen Feder. Insbesondere betrifft die Erfindung einen Schwingungsisolator, der in einem stationären Schwingungsisolationssystem zur Lagerung von Geräten der Halbleiterindustrie verwendet wird, also beispielsweise von Lithographiegeräten, optischen Inspektionsgeräten und Waver-Handling-Einrichtungen.

### Hintergrund der Erfindung

Derartige Schwingungsisolationssysteme sind bekannt. So zeigt beispielsweise die Patentschrift DE 698 177 50 T2 ein Schwingungsisolationssystem, welches zur schwingungsisolierten Lagerung eines Lithographiegeräts verwendet wird. In der Druckschrift US6926263B1 sind weitere Ausführungsformen von solchen Vorrichtungen gezeigt.

Pneumatische Federn können dabei über ein Servoventil angesteuert werden und in die Regelschleife eines aktiven Schwingungsisolationssystems integriert werden.

Eine zu isolierende Masse ist dabei auf drei oder mehr Schwingungsisolatoren gelagert. Durch Isolatoren mit einer pneumatischen Feder wird eine Schwingungsisolation vom Untergrund bereits oberhalb der Eigenfrequenz des Federmassesystems erreicht.

Neben einer aktiven Schwingungsisolation über die pneumatischen Federn selbst gibt es auch berührungslos arbeitende Aktoren, wie beispielsweise Magnetaktoren, mit denen eine aktive Schwingungsisolation möglich ist. Diese tragen insbesondere zu einer Schwingungsisolation im höherfrequenten Bereich bei.

Weiter dienen pneumatische Federn dann einer Niveauregulierung des Systems. Eine Änderung des auf dem Schwingungsisolationssystem ruhenden Gewichts führt daher zu einer Änderung des nötigen Luftdrucks, was nur in Grenzen möglich ist und was in vielen Fällen zu einer unverwünschten Änderung der Eigenfrequenz führt.

Problematisch ist es, bei einer pneumatischen Feder ein Schwingungsisolationssystem bereitzustellen, mit dem zum einen ein Niveauausgleich möglich ist und bei dem gleichzeitig die vertikale und horizontale Steifigkeit derart hoch ist, dass auch eine Eigenfrequenz von über 5 Hz realisiert werden kann, um so kurze Ausregelzeiten zu erreichen. Dies ist bei bekannten Systemen nicht oder nur mit hohem Aufwand möglich.

### Aufgabe der Erfindung

Der Erfindung liegt demgegenüber die Aufgabe zugrunde, die genannten Nachteile eines pneumatischen Schwingungsisolators zu reduzieren.

Insbesondere soll ein einfach aufgebauter Schwingungsisolator bereitgestellt werden, bei dem über eine pneumatische Feder ein Niveauausgleich möglich ist und bei welchem gleichzeitig eine verhältnismäßig hohe Eigenfrequenz, insbesondere eine Eigenfrequenz von über 5 Hz sowohl in horizontaler als auch in vertikaler Richtung erreicht werden kann.

### Zusammenfassung der Erfindung

Der Schutzbereich wird durch die Patentansprüche definiert.

Die Aufgabe der Erfindung wird bereits durch einen Schwingungsisolator nach dem unabhängigen Anspruch gelöst. Bevorzugte Ausführungsformen und Weiterbildungen der Erfindung sind den abhängigen Ansprüchen zu entnehmen.

Die Erfindung betrifft einen Schwingungsisolator, welcher insbesondere zur Verwendung in einem stationär angeordneten Schwingungsisolationssystem vorgesehen ist. Dieses dient insbesondere der schwingungsisolierten Lagerung von Geräten der Halbleiterindustrie.

Der Schwingungsisolator umfasst eine pneumatische Feder. Diese umfasst in der Regel einen in einem Arbeitsraum mittels Fluiddruck abgestützten Kolben. Die Erfindung betrifft insbesondere eine als geschlossenes System ausgebildete pneumatische Feder, bei welcher der Arbeitsraum mittels einer Membran ausgebildet ist.

Die pneumatische Feder ist über einen Biegestab oder ein Knickpendel mit einem Kopfteil verbunden.

Insbesondere ist der Kolben der Feder mit einem Oberteil des Isolators verbunden. Denkbar ist aber auch, die Anordnung umzudrehen.

Durch den Biegestab oder das Knickpendel wird im Wesentlichen die horizontale Steifigkeit des Systems bestimmt, also die Steifigkeit in horizontaler Richtung im eingebauten Zustand.

Dies kann im einfachsten Fall ein Biegestab mit sich nicht veränderndem Durchmesser sein, welcher sich bei horizontaler Belastung zur Seite biegt.

Denkbar ist aber auch die Verwendung von Knickpendeln oder Kombinationen hieraus.

Es ist insbesondere denkbar, den Biegestab abschnittsweise mit Schwächungszonen zu versehen, welche man als Scharnier ansehen kann, so dass in diesem Fall eine Kombination von Biegestab und Knickpendel vorhanden wäre.

Der Biegestab oder das Knickpendel ist wiederum über zumindest eine in einer vertikalen Richtung wirksame Blattfeder mit dem Basisteil gekoppelt.

Über die zumindest eine Blattfeder wird die Steifigkeit des Isolators in vertikaler Richtung bestimmt.

Die Verwendung von Blattfeder und Knickpendel ermöglicht eine besonders einfache Anpassung des Isolators, etwa durch Austausch von Biegestab oder Blattfeder.

Weiter kann die horizontale Steifigkeit unabhängig von der vertikalen Steifigkeit eingestellt werden.

Die Verwendung von Blattfedern bringt zudem den Vorteil, dass Blattfedern präzise gefertigt werden können und die berechnete Steifigkeit im hohen Maße mit der tatsächlichen Steifigkeit korreliert.

Bei einer Weiterbildung der Erfindung umfasst die pneumatische Feder einen Kolben mit einer Verlängerung. Der Biegestab oder das Knickpendel ist zumindest abschnittsweise in der Verlängerung angeordnet.

Die Verlängerung ist insbesondere als mittige Vertiefung des Kolbens ausgebildet, welche in den Arbeitsraum des Kolbens ragt.

Der Arbeitsraum des Kolbens dient nunmehr der Aufnahme des Biegestabs oder des Knickpendels. Dies wirkt sich günstig auf die Eigenfrequenz aus, reduziert die Prolongation von Schwingungen und sorgt für eine kompaktere Bauweise.

Insbesondere ragt die Verlängerung um zumindest die halbe Höhe des Arbeitsraums in den Arbeitsraum hinein.

Bei einer bevorzugten Ausführungsform der Erfindung ist die Blattfeder Teil eines Blattfederpakets.

So lässt sich durch Austauschen oder Weglassen von einzelnen Blattfedern eine sehr einfache Anpassung des

Schwingungsisolators erreichen. Die Blattfedern sind vorzugsweise über Distanzringe voneinander beabstandet.

Als Blattfeder wird bei einer bevorzugten Ausführungsform, insbesondere für das Blattfederpaket, eine Blattfeder verwendet, welche mehrere parallel geschaltete Federsegmente umfasst.

Es ist insbesondere vorgesehen, eine Blattfeder zu verwenden, welche ein Außenteil und ein Innenteil umfasst, die über mehrere, vorzugsweise zumindest drei, Arme verbunden sind, die die eigentlichen Blattfedern bilden.

Die Blattfeder kann insbesondere einen mit dem Kolben bzw. der Verlängerung des Kolbens verbundenen Innenring sowie einen Außenring aufweisen, welcher mit dem Basisteil verbunden ist.

Es versteht sich, dass Innenring und/oder Außenring nicht kreissegmentförmig, sondern auch polygonal ausgebildet sein können.

Durch die Erfindung kann ein Schwingungsisolator bereitgestellt werden, der im eingebauten Zustand in vertikaler und/oder horizontaler Richtung eine Eigenfrequenz von mehr als 5 Hertz aufweist.

Zur Einstellung der Steifigkeit sind Biegestab und/oder Blattfeder vorzugsweise austauschbar ausgebildet.

Es ist insbesondere vorgesehen, ein von einer Richtung her zugängliches Blattfederpaket bereitzustellen, bei welchem die einzelnen Blattfedern herausgenommen werden und gegen andere Federn oder Distanzringe ersetzt werden können.

Die Erfindung bezieht sich insbesondere auf einen Schwingungsisolator, welcher im Zusammenhang mit einem Schwingungsisolationssystem verwendet wird, welches eine aktive Regelung aufweist.

Dabei ist zumindest ein Sensor vorgesehen, der Schwingungen oder die Position der zu isolierenden Last oder des Bodens, auf dem das Schwingungsisolationssystem ruht, erfasst.

Der Fluiddruck in der pneumatischen Feder des Schwingungsisolators wird über ein Servoventil und eine Regeleinrichtung, welche mit dem zumindest einen Sensor verbunden ist, gesteuert.

So kann über den Schwingungsisolator ein Niveauausgleich bereitgestellt werden, indem die vertikale Position der zu isolierenden Last erfasst wird und basierend auf einem Vergleich der Ist- mit einer Soll-Position der Fluiddruck in der pneumatischen Feder gesteuert wird.

Denkbar ist auch, zusätzliche berührungslos arbeitende Kraftaktoren in dem Schwingungsisolationssystem, insbesondere in dem Schwingungsisolator selbst, einzubauen, welche insbesondere einer Isolation von höherfrequenten Schwingungen dienen.

### Kurzbeschreibung der Zeichnungen

Der Gegenstand der Erfindung soll im Folgenden Bezug nehmend auf die Fig. 1 bis Fig. 6 näher erläutert werden.
Fig. 1 zeigt eine schematische Prinzipskizze eines Schwingungsisolators.
Fig. 2 zeigt eine Schnittansicht eines Ausführungsbeispiels eines Schwingungsisolators.
Fig. 3 zeigt eine weitere Schnittansicht eines Teilbereichs eines Schwingungsisolators.
Fig. 4 zeigt eine Baugruppe, welche einen Schwingungsisolator umfasst in teilweise aufgebrochener perspektivischer Ansicht.
Fig. 5 zeigt eine Blattfeder, wie sie für einen erfindungsgemäßen Schwingungsisolator verwendet werden kann in der Draufsicht.
Fig. 6 ist eine schematische Darstellung eines Schwingungsisolationssystems.

### Detaillierte Beschreibung der Zeichnungen

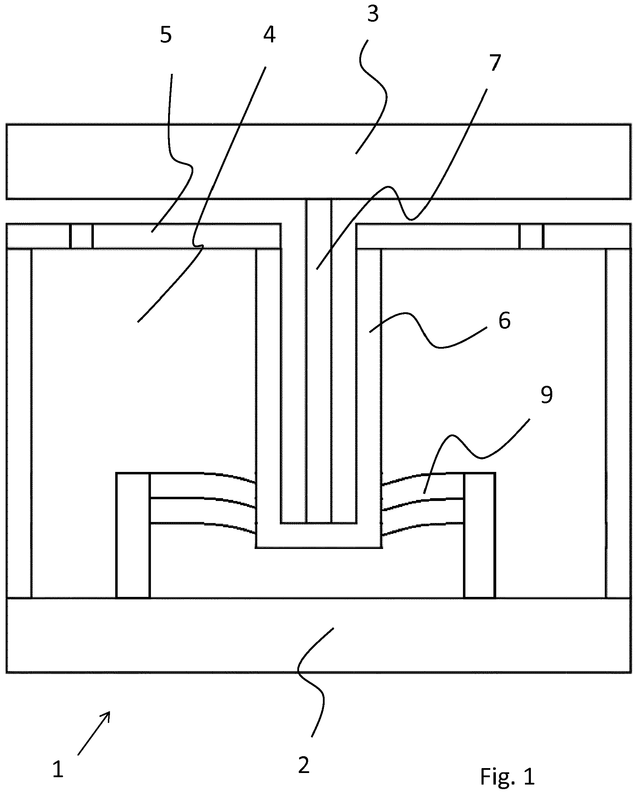

Bezug nehmend auf die schematische Ansicht gemäß Fig. 1 soll das Grundprinzip der Erfindung erläutert werden.

Zu sehen ist in einer Schnittansicht ein Schwingungsisolator 1.

Dieser umfasst ein Basisteil 2 sowie ein Kopfteil 3, welches schwingungsisoliert gegenüber dem Basisteil 2 gelagert ist.

Das Kopfteil 3 kann Teil einer Baugruppe sein, die den Schwingungsisolator 1 bildet, welcher sodann in ein Schwingungsisolationssystem eingebaut wird. Hierbei kann das Kopfteil 3 beispielsweise an einem Tisch, der der schwingungsisolierten Lagerung eines Lithographiegeräts dient, befestigt werden.

Denkbar ist aber auch, dass das Kopfteil 3 integraler Bestandteil des Tisches ist.

Der Schwingungsisolator 1 umfasst des Weiteren einen Arbeitsraum 4, in welchem ein Fluiddruck vorhanden ist und über welchen ein Kolben 5 abgestützt wird. Der Arbeitsraum 4 ist mittels einer Membran (nicht dargestellt) verschlossen, welche den Kolben 5 gegenüber dem restlichen Gehäuse des Schwingungsisolators beweglich macht.

Der Kolben 5 umfasst eine sich in vertikaler Richtung erstreckende Verlängerung 6. Die Verlängerung 6 ist in diesem Ausführungsbeispiel mit dem restlichen Kolben verschraubt. Eine einstückige Ausgestaltung ist aber ebenfalls denkbar.

Unten in dieser Verlängerung ist ein Biegestab 7 befestigt, welcher mit dem Kopfteil 3 verbunden ist.

Hierüber wird eine horizontale Federwirkung durch Verbiegen des Biegestabs 7 bereitgestellt.

Der Kolben 5, in diesem Ausführungsbeispiel die Verlängerung 6 des Kolbens 5, ist über ein Blattfederpaket 9 mit dem Basisteil 2 verbunden.

Über das Blattfederpaket 9 wird eine Schwingungsisolation in vertikaler Richtung bereitgestellt.
Die Steifigkeit des Isolators wird überwiegend über das Blattfederpaket 9 bestimmt, während die pneumatische Feder, die durch den Arbeitsraum 4 und den Kolben 5 gebildet wird, in erster Linie einem Niveauausgleich dient.

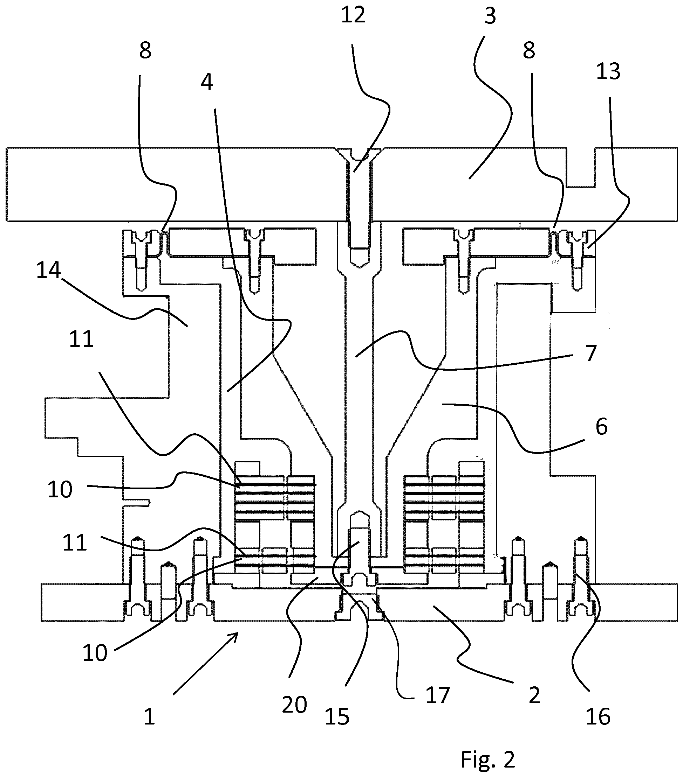

Fig. 2 zeigt eine Schnittansicht eines Ausführungsbeispiels eines Schwingungsisolators.

Dieser umfasst das Basisteil 2 sowie das schwingungsisoliert damit gekoppelte Kopfteil 3.

Zu erkennen ist auch hier, dass der Arbeitsraum 4 mittels einer unterhalb des Kopfteils 3 angeordneten Membran 8 verschlossen ist.

Die Membran 8 ist mittels eines Spannrings 13 mit dem Gehäuse 14 des Arbeitsraums 4 verbunden.

Weiter zu erkennen ist der Biegestab 7, der mit der Schraube 12 mit dem Kopfteil 3 verbunden ist.

Der Biegestab 7 ist unten mittels der Schraube 15 mit der Verlängerung 6 verbunden. Hierzu umfasst die Verlängerung 6 ein Unterteil 20.

Durch Lösen der leicht zugänglichen Schrauben 12 und 15 kann der Biegestab entnommen und zur Abstimmung des Isolators ausgetauscht werden. Die Schraube 15 ist nach Entfernen der Schraube 17 zugänglich, welche den Arbeitsraum 4 verschließt.

Das Gehäuse 14 des Arbeitsraums 4 ist mittels der Schrauben 16 mit dem Basisteil 2 verbunden.

Weiter zu erkennen sind die einzelnen Federn 10 und Distanzringe 11 des Blattfederpaketes.

Nicht in dieser Ansicht zu sehen ist die zumindest eine Fluidleitung, über die der Arbeitsraum 4 mit Fluid versorgt wird.

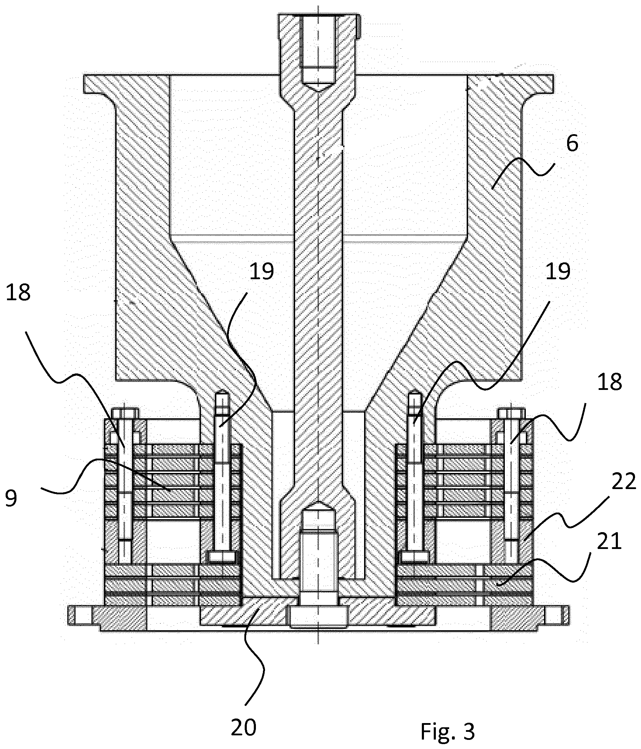

Fig. 3 zeigt eine Detailansicht eines Teils eines erfindungsgemäßen Schwingungsisolators, und zwar der Verlängerung 6, welche mit dem Blattfederpaket 9 verbunden ist.

Zu erkennen ist, dass zumindest ein Teil des Blattfederpakets 9 über Schrauben 18 mit dem Basisteil 2 und über Schrauben 19 mit der Verlängerung 6 verbunden ist.

Nach dem Lösen der Schrauben kann das Blattfederpaket 9 bestehend aus Blattfedern und Distanzstücken entnommen werden.

Beabstandet von dem Blattfederpaket 9 ist ein unteres Blattfederpaket 21. Das untere Blattfederpaket 21 sowie das Unterteil werden durch Schrauben gehalten, die in dieser Schnittansicht nicht zu sehen sind.

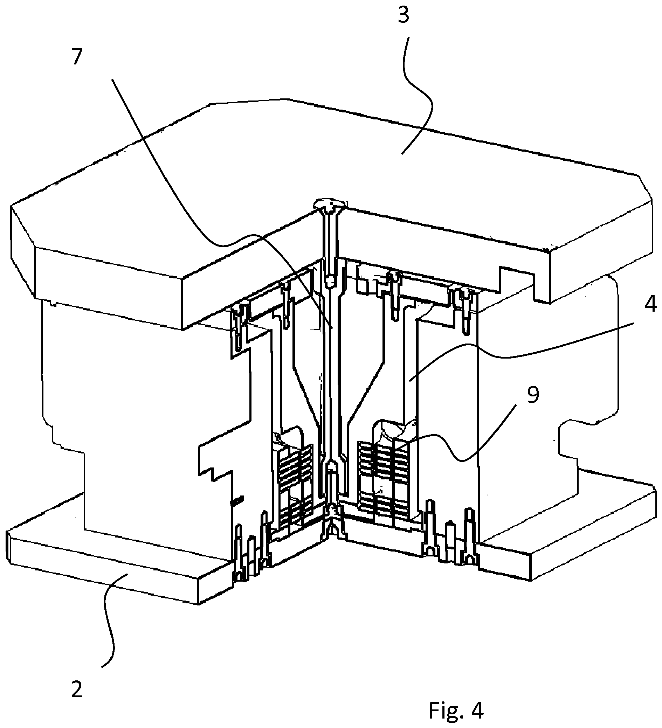

Fig. 4 zeigt eine perspektivische teils aufgebrochene Ansicht einer Baugruppe mit einem erfindungsgemäßen Schwingungsisolator.

Zu erkennen sind Basisteil 2 und Kopfteil 3 sowie der dazwischen liegende Arbeitsraum 4 des Schwingungsisolators, durch welchen der in einer Verlängerung des Kolbens angeordnete Biegestab 7 verläuft. Weiter zu erkennen ist das Federpaket 9, welches in vertikaler Richtung wirksam ist, wohingegen der Biegestab 7 in horizontaler Richtung wirksam ist.

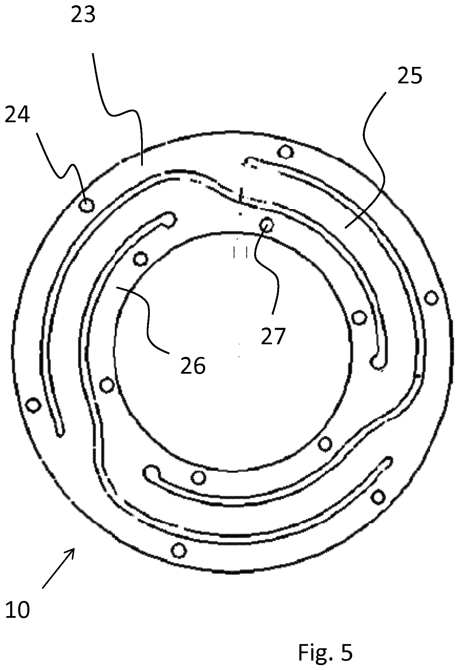

Fig. 5 zeigt eine Ansicht einer beispielhaften Blattfeder 10. Die in diesem Ausführungsbeispiel gezeigte Blattfeder umfasst einen Innenring 26, welcher Löcher 27 aufweist, um an der Verlängerung des Kolbens (6 in Fig. 3) befestigt zu werden.

Ein Außenring 23 umfasst Löcher 24, um am Basisteil befestigt zu werden.

Eine Federwirkung in vertikaler Richtung stellen in diesem Ausführungsbeispiel drei Federsegmente 25 sicher, welche Außenring 23 und Innenring 26 miteinander verbinden und welche parallel geschaltet sind.

Durch Austauschen oder Weglassen derartiger Blattfedern 10 im Federpaket kann die Charakteristik des Schwingungsisolators auf einfache Weise angepasst werden.

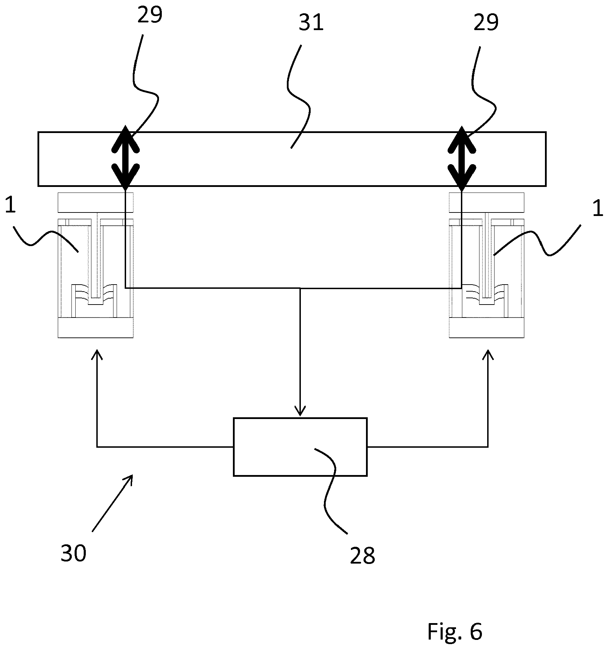

Fig. 6 zeigt eine schematische Ansicht eines Schwingungsisolationssystems 30.

Dieses umfasst einen Tisch 31, welcher auf zumindest drei Schwingungsisolatoren 1 gelagert ist.

Über Sensoren 29 wird das Niveau des Tisches an der Position des jeweiligen Schwingungsisolators 1 erfasst.

Basierend auf dem Signal der Sensoren 29 steuert die Regeleinrichtung 28 den Druck in den Schwingungsisolatoren 1 und stellt so einen Niveauausgleich bereit.

Es versteht sich, dass das Schwingungsisolationssystem noch weitere Sensoren und/oder Aktoren, insbesondere berührungslos arbeitende Kraftaktoren, umfassen kann.

Durch Austausch von Blattfedern im Federpaket und/oder vom Biegestab können die Schwingungsisolatoren 1 an der jeweiligen Position auf sehr einfache Weise auf eine gleiche Eigenfrequenz eingestellt werden.

### Bezugszeichenliste

- 1: Schwingungsisolator
- 2: Basisteil
- 3: Kopfteil
- 4: Arbeitsraum
- 5: Kolben
- 6: Verlängerung
- 7: Biegestab
- 8: Membran
- 9: Blattfederpaket
- 10: Blattfeder
- 11: Distanzring
- 12: Schraube
- 13: Spannring
- 14: Gehäuse
- 15: Schraube
- 16: Schraube
- 17: Schraube
- 18: Schraube
- 19: Schraube
- 20: Unterteil
- 21: Blattfederpaket
- 22: Distanzring
- 23: Außenring
- 24: Loch
- 25: Federsegment
- 26: Innenring
- 27: Loch
- 28: Regeleinrichtung
- 29: Sensor
- 30: Schwingungsisolationssystem
- 31: Tisch

## Patentansprüche

1. Schwingungsisolator (1), umfassend eine pneumatische Feder, welche einen in einem Arbeitsraum (4) mittels Fluiddruck abgestützten Kolben (5) umfasst, **dadurch gekennzeichnet, dass** der Kolben (5) der pneumatischen Feder über einen Biegestab (7) und/oder ein Knickpendel mit einem Kopfteil (3) verbunden ist, welches als Oberteil des Schwingungsisolators (1) ausgebildet ist,
wobei der Biegestab (7) und/oder das Knickpendel über zumindest eine in einer vertikalen Richtung wirksame Blattfeder (10) mit einem Basisteil (2) gekoppelt ist.

2. Schwingungsisolator (1) nach dem vorstehenden Anspruch, **dadurch gekennzeichnet, dass** die pneumatische Feder einen Kolben (5) mit einer Verlängerung (6) umfasst, wobei der Biegestab (7) und/oder das Knickpendel zumindest abschnittsweise in der Verlängerung (6) angeordnet ist.

3. Schwingungsisolator (1) nach dem vorstehenden Anspruch, **dadurch gekennzeichnet, dass** die Verlängerung (6) in einen Arbeitsraum (4) des Kolbens (5) ragt.

4. Schwingungsisolator (1) nach dem vorstehenden Anspruch, **dadurch gekennzeichnet, dass** der Biegestab (7) und/oder das Knickpendel um mindestens die halbe Höhe des Arbeitsraums (4) in den Arbeitsraum (4) hinein ragt.

5. Schwingungsisolator (1) nach einem der vorstehenden Ansprüche, **dadurch gekennzeichnet, dass** die Blattfeder (10) Teil eines Blattfederpakets (9) ist.

6. Schwingungsisolator (1) nach dem vorstehenden Anspruch, **dadurch gekennzeichnet, dass** Blattfedern (10) des Blattfederpakets (9) über Distanzringe (11) voneinander beabstandet sind.

7. Schwingungsisolator (1) nach einem der vorstehenden Ansprüche, **dadurch gekennzeichnet, dass** die Blattfeder (10) mehrere parallel geschaltete Federsegmente umfasst.

8. Schwingungsisolator (1) nach dem vorstehenden Anspruch, **dadurch gekennzeichnet, dass** die Blattfeder (10) einen mit dem Kolben (5) verbundenen Innenring (26) und einem mit dem Basisteil (2) verbundenen Außenring (23) umfasst.

9. Schwingungsisolator (1) nach einem der vorstehenden Ansprüche, **dadurch gekennzeichnet, dass** der Schwingungsisolator in vertikaler und/oder horizontaler Richtung eine Eigenfrequenz von mehr als 5 Hz aufweist.

10. Schwingungsisolator (1) nach einem der vorstehenden Ansprüche, **dadurch gekennzeichnet, dass** der Biegestab oder das Knickpendel und/oder die Blattfeder zur Einstellung der Steifigkeit austauschbar ausgebildet ist.

11. Schwingungsisolationssystem (30) umfassend mehrere Schwingungsisolatoren (1) nach einem der vorstehenden Ansprüche.

12. Schwingungsisolationssystem (30) nach dem vorstehenden Anspruch, **dadurch gekennzeichnet, dass** das Schwingungsisolationssystem zumindest einen Sensor (29) zur Erfassung von Schwingungen oder der Position einer zu isolierenden Last und/oder eines Bodes auf dem das Schwingungsisolationssystem angeordnet ist, aufweist,
sowie eine Regeleinrichtung (18) für eine Fluidzufuhr der pneumatischen Feder, welche mit dem Sensor verbunden ist.

13. Schwingungsisolationssystem (30) nach dem vorstehenden Anspruch, **dadurch gekennzeichnet, dass** über die pneumatische Feder das Niveau der zu isolierenden Last regelbar ist.

## Claims

1. A vibration isolator (1), comprising a pneumatic spring which comprises a piston (5) that is supported by fluid pressure within a working space (4);
**characterized in that** the piston (5) of the pneumatic spring is connected to a head part (3) through a bending rod (7) and/or a buckling pendulum which is configured as a top part of the vibration isolator (1);
wherein the bending rod (7) and/or the buckling pendulum is coupled to a base part (2) through at least one leaf spring (10) that is effective in a vertical direction.

2. The vibration isolator (1) according to the preceding claim, **characterized in that** the pneumatic spring comprises a piston (5) with an extension (6), wherein the bending rod (7) and/or the buckling pendulum is arranged in the extension (6), at least sections thereof.

3. The vibration isolator (1) according to the preceding claim, **characterized in that** the extension (6) protrudes into a working space (4) of the piston (5).

4. The vibration isolator (1) according to the preceding claim, **characterized in that** the bending rod (7) and/or the buckling pendulum protrudes into the working space (4) over at least half the height of the working space (4).

5. The vibration isolator (1) according to any one of the preceding claims, **characterized in that** the leaf spring (10) is part of a leaf spring assembly (9).

6. The vibration isolator (1) according to the preceding claim, **characterized in that** leaf springs (10) of the leaf spring assembly (9) are spaced from each other by spacer rings (11).

7. The vibration isolator (1) according to any one of the preceding claims, **characterized in that** the leaf spring (10) comprises a plurality of spring segments connected in parallel.

8. The vibration isolator (1) according to the preceding claim, **characterized in that** the leaf spring (10) comprises an inner ring (26) connected to the piston (5) and an outer ring (23) connected to the base part (2).

9. The vibration isolator (1) according to any one of the preceding claims, **characterized in that** the vibration isolator has a natural frequency of more than 5 Hz in the vertical and/or horizontal directions.

10. The vibration isolator (1) according to any one of the preceding claims, **characterized in that** the bending rod or the buckling pendulum and/or the leaf spring are designed to be interchangeable, for adjusting rigidity.

11. A vibration isolation system (30), comprising a plurality of vibration isolators (1) according to any one of the preceding claims.

12. The vibration isolation system (30) according to the preceding claim, **characterized in that** the vibration isolation system comprises at least one sensor (29) for capturing vibrations or the position of a load to be isolated and/or of a floor on which the vibration isolation system is arranged,
and a control device (18) for fluid supply to the pneumatic spring, which is connected to the sensor.

13. The vibration isolation system (30) according to the preceding claim, **characterized in that** the pneumatic spring allows to control the level of the load to be isolated.

## Revendications

1. Isolateur de vibrations (1), comprenant un ressort pneumatique, lequel comprend un piston (5) soutenu au moyen d'une pression de fluide dans une chambre de travail (4), **caractérisé en ce que** le piston (5) du ressort pneumatique est relié par l'intermédiaire d'une barre de flexion (7) et/ou d'un pendule compensateur à une partie tête (3), laquelle est réalisée sous la forme d'une partie supérieure de l'isolateur de vibrations (1),
dans lequel la barre de flexion (7) et/ou le pendule compensateur sont accouplés à une partie de base (2) par l'intermédiaire d'au moins un ressort à lames (10) agissant dans un sens vertical.

2. Isolateur de vibrations (1) selon la revendication précédente, **caractérisé en ce que** le ressort pneumatique comprend un piston (5) pourvu d'un prolongement (6), dans lequel la barre de flexion (7) et/ou le pendule compensateur sont agencés au moins en partie dans le prolongement (6).

3. Isolateur de vibrations (1) selon la revendication précédente, **caractérisé en ce que** le prolongement (6) fait saillie dans une chambre de travail (4) du piston (5).

4. Isolateur de vibrations (1) selon la revendication précédente, **caractérisé en ce que** la barre de flexion (7) et/ou le pendule compensateur font saillie à l'intérieur de la chambre de travail (4) sur au moins la moitié de la hauteur de la chambre de travail (4).

5. Isolateur de vibrations (1) selon l'une quelconque des revendications précédentes, **caractérisé en ce que** le ressort à lames (10) fait partie d'un paquet de ressorts à lames (9).

6. Isolateur de vibrations (1) selon la revendication précédente, **caractérisé en ce que** les ressorts à lames (10) du paquet de ressorts à lames (9) sont espacés les uns des autres par des bagues d'écartement (11).

7. Isolateur de vibrations (1) selon l'une quelconque des revendications précédentes, **caractérisé en ce que** le ressort à lames (10) comprend plusieurs segments de ressort montés en parallèle.

8. Isolateur de vibrations (1) selon la revendication précédente, **caractérisé en ce que** le ressort à lames (10) comprend une bague intérieure (26) reliée au piston (5) et une bague extérieure (23) reliée à la partie de base (2).

9. Isolateur de vibrations (1) selon l'une quelconque des revendications précédentes, l'isolateur de vibrations étant **caractérisé en ce qu'**il présente une fréquence propre supérieure à 5 Hz dans le sens vertical et/ou horizontal.

10. Isolateur de vibrations (1) selon l'une quelconque des revendications précédentes, **caractérisé en ce que** la barre de flexion ou le pendule compensateur et/ou le ressort à lames sont interchangeables aux fins de réglage de la rigidité.

11. Système d'isolation de vibrations (30) comprenant plusieurs isolateurs de vibrations (1) selon l'une quelconque des revendications précédentes.

12. Système d'isolation de vibrations (30) selon la revendication précédente, le système d'isolation de vibrations étant **caractérisé en ce qu'**il présente au moins un capteur (29) destiné à détecter des vibrations ou la position d'une charge à isoler et/ou d'un sol sur lequel le système d'isolation de vibrations est agencé,
ainsi qu'un dispositif de régulation (18) pour une amenée de fluide au ressort pneumatique, lequel est relié au capteur.

13. Système d'isolation de vibrations (30) selon la revendication précédente, **caractérisé en ce que** le niveau de la charge à isoler peut être régulé par l'intermédiaire du ressort pneumatique.
